# EUROPEAN PATENT SPECIFICATION

(11) **EP 2 162 727 B1**
(45) Date of publication and mention of the grant of the patent: **08.10.2014**
(21) Application number: 08762470.6
(22) Date of filing: 25.06.2008
(51) Int. Cl.: G01N 21/27, G01N 21/59, G01N 21/84, G01N 21/86

(54) **READER DEVICE AND METHOD OF USE**
LESEVORRICHTUNG UND IHRE VERWENDUNG
DISPOSITIF DE LECTURE ET PROCÉDÉ D'UTILISATION

(30) Priority: 25.06.2007 GB 0712208
(43) Date of publication of application: 17.03.2010
(73) Proprietor: Mediwatch Uk Limited, Rugby CV2 11QN (GB)
(72) Inventor: Hopkins, Andrew, Sutton Coldfield B73 5EE (GB); Davidson, Ian, William, Sharnbrook Bedford MK44 1LQ (GB); Partridge, Matthew, Colin, Sharnbrook Bedford MK44 1LQ (GB)
(74) Representative: Gee, Steven William
(86) International application number: PCT/GB2008/002162
(87) International publication number: WO 2009/001071

(56) References cited:
- EP-A- 0 653 625
- WO-A-2005/088519
- US-A- 6 136 610

## Description

### FIELD OF THE INVENTION

This invention relates to reader device and to a method of use, and in particular to a reader device suitable for use with test strips used in immunoassay methods.

### BACKGROUND OF THE INVENTION

Immunoassay is a method of diagnosis of certain diseases and conditions in humans, including testing for prostate cancer for example. The method detects the presence of an analyte within a sample of blood or other bodily fluid. The sample is typically placed onto a test strip which carries an antibody which is bound to a marker, and the analyte can become bound to the marker by way of the antibody, whereby the marker can be used to indicate the presence of the analyte.

The analyte can be an antigen, a hormone, or another constituent of blood, urine, saliva or other appropriate bodily fluid.

In a known immunoassay method and apparatus for prostate cancer, a blood sample is taken, and delivered onto a blood separation zone of a test strip. It is recognised that a man suffering from prostate cancer may have an elevated level of a particular antigen present in his blood, namely PSA or prostate specific antigen. The antigen is present in the blood serum rather than in the red blood cells, and it is first necessary to separate the blood so as to remove the red blood cells which would otherwise obscure the coloured marker.

Accordingly, the test strip has a blood separation zone which retains the red blood cells and allows the (substantially colourless) serum to continue to a reaction zone. The reaction zone comprises a fibrous mat which has been impregnated with antibodies bound to a coloured marker. In the case of prostate cancer the coloured marker is most commonly gold sol.

Any antigen which is present in the sample binds to the antibodies and carries the antibodies and bound coloured marker out of the reaction zone and into a test zone comprising a nitrocellulose membrane. The sample flows along the nitrocellulose membrane past a test line comprising further antibodies which have been immobilised. The antigen in the sample binds to the further antibodies and since the further antibodies are immobilised upon the membrane the antigen also becomes immobilised and thereby also immobilises the coloured marker.

The test strip is typically located in a housing which has a window above and below the nitrocellulose membrane and the further antibodies are arranged in a line across the membrane underneath the window. The presence (or absence) of a line of coloured marker at the end of the test provides a visual indication of the presence (or absence) of the prostate specific antigen in the blood sample.

Such a method of immunoassay, in which an antigen or other suitable analyte binds to two separate antibodies, is one of the many different types of assay and immunoassay methods in current use.

In some immunoassay methods, the presence or absence of a line of coloured marker is all that is required, i.e. the test provides a qualitative assessment indicating the presence or absence of a particular analyte, and a visual inspection of the membrane is sufficient to determine the outcome of the test. In other immunoassay methods a quantitative assessment is required, and in such tests it is preferred to use a reader device which can determine the intensity of the marker and therefore the amount of analyte in the sample.

### DESCRIPTION OF THE PRIOR ART

A reader device for use in immunoassay testing methods is described in US Patent 6,136,610. This reader device has a channel for receiving the housing containing the test strip, the test strip housing projecting from the reader device sufficiently to allow the sample to be placed onto the test strip. The reader device has a timer to determine the duration of the test, and an optical sensor arranged above the window of the test strip housing. The optical sensor can move relative to the body of the reader device, and therefore relative to the test strip, and can therefore scan the region of the test line. In particular, the optical sensor can determine the position of the ends of the window, and since the test line is in a known position relative to the window the test line can be located.

This reader device can detect the deposition of a sample on the test strip, and the deposition of the sample starts a timer, the reader device activating the optical sensor to measure the intensity of the test line after a predetermined period of time corresponding to the duration of the particular test. The reader device can be used for different immunoassay tests, the reader device having a memory containing data including the amount of analyte present corresponding to a range of intensity measurements.

Another reader device is disclosed in European Patent Application 0 833 145. In this reader device the optical sensor is fixed within the body of the reader device and so it is necessary to ensure that the test strip is positioned accurately within the reader device in order that the optical sensor is correctly positioned relative to the test line.

European Patent Application 0 653 625 discloses a reader device for a test strip. The reader device has a channel for the test strip and a sensor located adjacent to the channel, the sensor comprising a source of radiation and a detector. A diffuser is provided for calibrating the reader device.

### SUMMARY OF THE INVENTION

The present invention addresses disadvantages and drawbacks of the previously disclosed reader devices. In particular, it avoids the requirement for precise positioning of the test strip by utilising a movable optical sensor as in US Patent 6,136,610.

According to the invention therefore, there is provided a reader device for a test strip, the reader device having:
a channel for receiving the test strip, the channel providing a test location for the test strip whereby the test strip is positioned in the test location during use of the reader device,
a sensor located adjacent to said channel, the sensor comprising a source of radiation for emitting electromagnetic radiation and a detector for detecting the intensity of radiation emitted from the source of radiation after transmission through the test strip, and
a calibrating attenuator through which radiation emitted from the source of radiation can be passed, the calibrating attenuator having a known transmissivity, characterised in that the calibrating attenuator is located adjacent to the channel and away from the test location,
and in that the sensor is movable between a test position adjacent to the test location and a separate calibration position adjacent to the calibrating attenuator.

There is also provided a method of operating a reader device, comprising the steps of:
{i} providing a reader device as herein defined,
{ii} moving the sensor adjacent to a test line of a test strip positioned in the test location and detecting the intensity of radiation emitted from the source of radiation and transmitted through the test line,
{iii} moving the sensor adjacent to the calibrating attenuator and directing radiation at the calibrating attenuator, and
{iv} detecting the intensity of radiation emitted from the source of radiation and transmitted through the calibrating attenuator.

Accordingly, the inventors have realised that the intensity of the radiation generated by the source of radiation can change due to many factors, including for example ambient temperature, temperature of the source of radiation, age of the source of radiation, and variations in the electrical supply to the reader device, such changes perhaps occurring between successive tests. Even small changes in the intensity of the radiation generated by the source of radiation can affect the emitted radiation which is detected and it is therefore necessary to identify changes in intensity due to the source of radiation so as to eliminate or compensate for those changes so that the changes do not adversely affect a test result. With the increasing accuracy and reliability of immunoassay tests, and their more widespread use in quantitative tests, the requirement to eliminate or compensate for adverse factors is becoming increasingly important. By using a calibrating attenuator which will cause a known attenuation of the radiation generated by the source, changes in the radiation can be detected and countered.

The changes may be countered, for example, by increasing or decreasing the electrical voltage to the source of radiation until the detected radiation matches a predetermined value, so that the changes in the intensity of the radiation which is generated are eliminated. Alternatively, the changes in intensity of the radiation which is emitted may be compensated for by applying a correction factor to the measured intensity of the radiation emitted from the test strip, so that the result of the calibration step is factored into the result for the test line by the reader device.

It will be understood that the calibration steps are ideally undertaken before the measurement of the test line, and this will be essential if the changes to the intensity of the radiation generated by the source are to be eliminated. If the changes in intensity of radiation are to be compensated for, however, it is possible for the calibration steps to be undertaken after the measurement of the test line, or both before and after the measurement of the test line, as desired.

Transmission through the test strip is understood to give a better quantitative assessment of the marker than reflectance from the test strip, as the radiation must pass through the complete depth of the test line and not merely reflect from its surface, so that the detected radiation is dependent upon the volume of marker within the volume of the test line, and not merely the amount of marker in its surface area. The source of radiation is preferably mounted to the opposed side of the channel than the detector, and the calibrating attenuator is also preferably mounted between the source of radiation and the detector.

Preferably, the radiation emitted by the source is electromagnetic radiation in the visible spectrum, and it is recognised that the vast majority of immunoassay tests with which the invention will most likely be used utilise visible test lines. The invention, could, however, operate in the infra-red, ultra-violet or other parts of the spectrum, as desired, and in some methods it may be more appropriate to use a non-visible marker.

The fact that the sensor is movable has the additional advantage that the sensor can be moved adjacent to the calibrating attenuator in order to perform the calibration step before each measurement of a test line is undertaken. Because the calibrating attenuator is mounted in the reader in a position which is not occupied by the test strip, the calibration step can be performed when the test strip is located within the device. Ideally, therefore, the calibration step will be performed immediately before (and/or immediately after) the test line is measured so that changes in intensity of radiation generated by the source between the calibration step and measurement of the test strip are minimised.

The movable sensor has additional advantages, however, in enabling the scanning of the whole of the section of test strip underneath the window. Such scanning can be used to detect an invalid test.

One cause of invalidity of the test is that the sample does not reach the test line in the desired time. This may be caused, for example, by an insufficient sample volume, causing the sample either not to reach the test line at all, or to reach the test line later than would normally be expected so that the reaction between the analyte and the reactant on the test line progresses for less time than required. The sensor can detect the leading edge of the sample as it moves along the test strip underneath the window, and can determine if the sample has reached (or will reach) the test line in the expected time to allow a valid test.

Another cause of invalidity is the admission of red blood cells into the test zone. Red blood cells need not invalidate a test unless they encroach too close to the test line and obscure or supplement the marker. The sensor can be used to detect for the presence of red blood cells within the sample and can invalidate a test if the red blood cells encroach within a predetermined distance of the test line.

### BRIEF DESCRIPTION OF THE PREFERRED EMBODIMENTS

The invention will now be described in more detail, by way of example, with reference to the accompanying drawings, in which:
- Fig.1: shows a schematic representation of the reader device according to the invention;
- Fig.2: shows an embodiment of test strip suitable for use with the reader of Fig.1; and
- Fig.3: shows a sectional view of the test strip of Fig.2 together with a schematic view of certain components of the reader.

### DETAILED DESCRIPTION

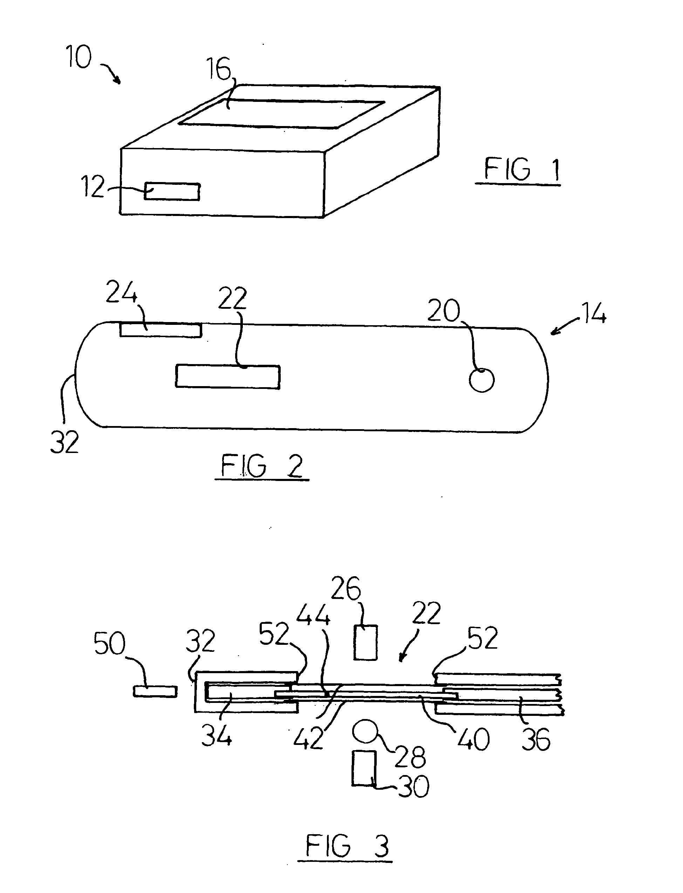

The reader device 10 of Fig.1 has a channel 12 for receiving the test strip housing 14 (Fig.2). When a measurement is to be performed, the test strip in its housing 14 is inserted into the channel 12 for a period of time determined as appropriate for the particular test being performed.

A typical test may take ten minutes for example, and the control means (not shown) of the reader device 10 will incorporate a clock to measure the period of time between the start of the test (which may be initiated by the introduction of the test strip housing 14 into the reader device 10) and the measurement.

The reader device 10 includes a touchscreen 16 by which data can be inputted to the reader device, and by which data can be displayed to the user. The data which will typically be displayed include a clock to show the duration of the test being undertaken, the type of test being undertaken, and the results of the test. Typically, the results of the test can be shown as a pass or fail (in cases in which the reader device is being used solely for a qualitative test) or as an absolute value of the analyte which has been detected. In addition, details of errors can be displayed and advice given to the user by way of the touchscreen 16.

Alternatively, the touchscreen 16 can be replaced by an alphanumeric keyboard for the inputting of data, and a separate display means for the outputting of data.

A suitable test strip housing 14 for use with the reader device 10 is shown in Fig.2. In known fashion, the test strip is located within a housing 14 which has an application opening 20 into which the sample can be introduced onto the test strip, and a test window 22 through which the test zone of the test strip can be viewed. Also, in this embodiment, the test strip housing 14 carries an information panel 24 which is preferably machine-readable such as a bar code. The information panel will provide information such as the analyte for which the test strip has been designed to test, and the required duration of the test. The reader device 10 incorporates a read head (not shown) which can read the information on the information panel. The control means of the reader device can then time the test accordingly, and issue appropriate instructions and results to the user by way of the touchscreen 16.

The read head can for example be fixed within the body of the reader device, and can read the data upon the information panel 24 as the test strip is pushed into the channel 12, or the read head can be movable and can scan the bar code of an inserted test strip housing.

The information panel may also include data corresponding to the manufacturing and/or expiry dates of the test strip, so that the reader device 10 can invalidate the test if the test strip is out of date.

As seen in Fig.3, the reader device 10 also incorporates a light source 26, a lens 28 and a detector 30, which together comprise the sensor of the reader device 10. All of these components are mounted together upon a carriage which is movably mounted within the body of the reader device 10. The carriage is not shown in the drawings, but it is straightforward for a skilled person to construct a suitable carriage for mounting of the light source 26, lens 28 and detector 30 in fixed positions relative to one another, with all of these components being movable together within the body of the reader device 10 to the left and right as viewed in Fig.3.

Instructions for use of the reader device will preferably include the partial insertion of the test strip 14 before the sample has been added to the application opening 20. In this way, the automatic timing of the measurement can be better controlled by the reader device 20. The channel 12 can have a movable stop which limits the initial insertion of the test strip 14. The carriage can be moved so that the sensor 26, 28, 30 can identify the position of the leading edge 32 of the test strip housing 14, or can identify the location of the edges of the window 22, in order to determine that the test strip housing has been partially inserted to the correct position.

Once the test strip housing has been partially inserted the user is instructed (preferably by way of the touchscreen 16) to add the sample to the application opening 20, and then, depending upon the sample type, to insert fully the test strip housing 14 into the reader device 10. The control means for the reader device 10 can move the stop so as to permit full insertion of the test strip housing.

In this way, the control means for the reader device 10 is able to identify, within the range of a few seconds, when the sample was added to the test strip, so that the measurement can be accurately timed. Alternatively, the timing of the test can be non-automatic, with the timer being initiated by the user after the sample has been added.

It will be understood that the test strip includes a material, usually an absorbent material, whereby the sample will flow from the application opening 20, past the window 22, and into a wicking pad 34 (Fig.3) or the like. In applications in which the sample is blood the test strip will also contain a blood separation zone 36 where the red blood cells can be retained.

The test zone 40 of the test strip is located between the blood separation zone 36 and the wicking pad 34, and in this embodiment comprises a nitrocellulose membrane. The test zone includes a test line 44, which in this embodiment comprises a line of antibodies which are immobilised upon the nitrocellulose membrane 40, in known fashion.

It will be understood that most test strips incorporate a control line downstream of the test line, the control line comprising another line of immobilised antibodies. The present reader device can be used with such test strips also, and can scan the control line as well as the test line.

It will also be understood that the nitrocellulose membrane 40 to either side of the test line transmits light, and the intensity of light passing through the membrane constitutes a "baseline" intensity against which the intensity of the test line (and control line) can be compared.

It will furthermore be understood that the marker is collected by the analyte within the sample before it enters the test zone 40, suitably during its passage through the blood separation zone 36.

In this embodiment the reader device 10 is adapted to test for transmission of visible light through the test line 44, so the test strip 14 has a transparent panel 42 to either side of the test zone 40, or at least to either side of the test line 44. Light is emitted by the source 26, passes through the test zone 40, and is focussed by the lens 28 upon the detector 30. The detector 30 can therefore measure the amount of light energy which passes through the test zone 40, and in particular the amount of light energy which passes through the test line 44. Alternatively stated, the detector 30 can determine the amount of light energy which is absorbed by the test line 44. Since the amount of light energy absorbed by the test line 44 is dependent upon the amount of marker deposited there, the output of the detector 30 is directly dependent upon the amount of marker deposited, which in turn is directly dependent upon the amount of analyte within the sample.

It will be understood that the test strip 14 substantially fills the opening of the channel 12, so that substantially no extraneous light enters the body of the reader device 10 during the test.

The lens 28 in this embodiment is a cylinder of glass, Perspex or the like, it being understood that the light source 26, the lens 28 and the detector 30 substantially span the width of the window 22.

In preferred embodiments of the invention, the light source 26 is an array of light emitting diodes arranged across substantially the full width of the window 22. The colour of the light source can be chosen to suit the application, and in particular to suit the colour of the marker. If the marker is gold sol for example then the light source is most preferably green, as green is a complementary colour to the red colouration of gold particles and this maximises the absorption of the light. A suitable green LED is available from the Nichia Corporation of Tokushima, Japan, and is sold under the trade name Nishia Green LED, model NSPG500S, that LED emitting light having a wavelength of 565 nm.

The detector is most preferably an array of photodiodes, a suitable detector being available from Texas Advanced Optoelectronic Solutions Inc. of Plano, Texas, USA, and sold under the trade name TSL1401 R.

According to the present invention, the reader device 10 also has a calibrating attenuator 50, which in this embodiment is mounted within the body of the reader device 10 adjacent to the leading end 32 of the test strip housing when the test strip housing 14 has been fully inserted into the reader device (as shown in Fig.3). The device is calibrated by way of the calibrating attenuator 50, which in this embodiment is an optical filter. The calibration is ideally undertaken for each test line measurement, so that even short-term changes in the intensity of light being generated can be eliminated or compensated. The calibration is ideally undertaken only shortly before, or shortly after, the measurement of the test line, so as to minimise the likelihood of unknown changes in the emitted light intensity. Preferably, the calibration is undertaken before the measurement of the test line.

The transmissivity of the calibrating attenuator 50 at the frequency of the light emitted by the source 26 is known, and when the carriage with the sensor 26, 28, 30 is moved adjacent to the calibrating attenuator the amount of light detected by the detector 30 will be directly dependent upon the amount of light being emitted by the source 26. The control means for the reader device will have a record of the value of light intensity required to be detected, and if the actual light intensity detected is higher or lower than that value the control means can either decrease or increase the electrical voltage to the light source until the required value is reached, or it can incorporate a correction factor into the measurements of the test line to compensate for changes in emitted light intensity.

In this way, the short term (e.g. temperature induced) and long-term (e.g. age induced) fluctuations in performance of the light source 26 can be substantially eliminated or compensated, and more accurate determinations of the light being absorbed by the test line 44 can be achieved.

It will be understood that the position of the test line 44 in relation to the window 22 is known for each test strip housing 14, so that the reader device 10 can locate the test line 44 by first locating the edges 52 of the window 22. Only one of the edges 52 needs to be located in order to locate the test line 44, but preferably the carriage is moved over a sufficient range to locate both of the edges 52.

The measurement of the test line 44 will not take place until after a predetermined time, depending upon the test being performed. Thus, it will be determined in advance how long the sample will take to progress along the test strip, and how long is required for the analyte to become bound to the reactant of the test line. In some applications the duration of a test is ten minutes, and the control means for the reader device can be set up to activate the sensor 26, 28, 30 shortly before ten minutes have elapsed. The light source 26 may take several seconds to stabilise its output, after which (in preferred embodiments) the sensor 26, 28, 30 will track to the calibrating attenuator 50 where the calibration is undertaken. The sensor 26 28, 30 will then track across the window 22 until both ends 52 of the window 22 are located, and the control means will then determine the position of the test line 44. The sensor 26, 28, 30 will move to the test line 44 and perform the measurement after the predetermined duration of the test.

It may be possible for the sensor 26, 28, 30 to undertake a single measurement at the centre of the test line 44, but more accurate results will be obtained if the sensor 26, 28, 30 tracks across the test line 44 so that measurements are taken (for example every 0.1 mm) from the leading edge of the test line 44 to the trailing edge of the test line 44. The lens 28 acts to average the light transmitted through the test line. The control means can detect the peak of the test line and can in one embodiment take a measurement at the peak and also over a chosen number of positions close to either side of the peak.

The control means may therefore be configured to calculate the amount of analyte in the sample based upon only some of the measurements taken. In one alternative embodiment the control means combines all of the measurements which are above 75% of the peak measurement. Such alternative methods will not rely upon the absolute position of the test line 44.

In addition, it is preferable that the measurements are taken only from adjacent the longitudinal centreline of the test zone 40, and not adjacent to the longitudinal edges of the window 22. Thus, any stray reflections from, or diffraction around, the longitudinal edges of the window 22 will not adversely affect the measurement.

It will be understood that in the above-described method the sensor 26, 28, 30 is dormant for a large proportion of the duration of the test. In other embodiments, it may be preferred to utilise the sensor for all or large part of the duration of the test. For example, the sensor 26, 28, 30 can scan across the window 22 whilst the sample is flowing along the test zone, it being recognised that the leading edge of the sample will be visible as a line separating the dry portion of the test zone 40 (i.e. that portion ahead of the sample) from the wet portion of the test zone. The sensor can be used to check the position of this leading edge, and the control means can invalidate the test if the leading edge does not reach the test line in a predetermined time. For example, it may be determined that the duration of the test is ten minutes and requires the sample to reach the test line within nine minutes. Additionally, it may be possible to alter (increase) the duration of the test to allow for poor solvent flow under certain circumstances.

Alternatively or additionally, the sensor 26, 28, 30 can scan across the test line substantially continuously, and can therefore measure changes in the light intensity detected as the marker becomes bound in the test line. The control means of the reader device 10 can determine that the test is complete when two subsequent measurements are identical, or differ by a predetermined (small) amount, so that it is not necessary to undertake the measurements at a predetermined time.

In addition, if red blood cells break down or otherwise escape the blood separation zone they will be visible across the test zone 40. The presence of red blood cells adjacent to the test line 44 can corrupt a test, but provided the red blood cells are not too close to the test line the test does not need to be invalidated. The sensor 26, 28, 30 can be used to track the progress of red blood cells and permit the control means to determine if the test should be invalidated. If, for example, the red blood cells do not reach the test line by the end of the test duration then the test will not be corrupted. If the red blood cells were visible at for example nine minutes but not visible at ten minutes then the test should be invalidated as the red blood cells may be superimposed upon the test line.

As above indicated, most test strips (including those for PSA testing) incorporate a control line downstream of the test line, the control line being provided to indicate that a test has been properly undertaken. Measurement of the intensity of the control line allows a further method of error checking. The minimum intensity for the control line can be predetermined and recorded by the control means, so that the reader device can confirm the presence of the control line, and can therefore confirm that a test has been properly undertaken. However, it is known with test strips for PSA that particularly high PSA concentrations within a sample can reduce the intensity of the control line, and can cause it to disappear altogether. If the reader device scans the control line and does not measure the minimum predetermined intensity for the control line then the test can be invalidated as an improper test, unless the test line exceeds another predetermined intensity. Thus, the reader device can ascertain whether the absence of the control line at the required intensity is due to an improper test, or to a high concentration of PSA.

As above indicated, if the calibration is to be used to adjust the intensity of the light generated by the light source 26 then the calibration must be performed before the measurement of the test line. If, however, the control means is to compensate for changes in the intensity of the light generated by the light source 26 by applying a correction factor to the measurements taken, then the calibration can be undertaken either before or after the measurement, or both.

If the calibration is undertaken both before and after the measurement then the control means needs to make no compensation if both of the calibration steps result in a detected light intensity matching the required intensity. If, however, one or both of the calibration steps results in a detected light intensity which does not match the required intensity then the control means needs to factor the calibration into the measurement of the test line (e.g. the measurement of the test line is increased by 1% if the detected light intensity in the calibration steps is 1% below the required intensity).

Ideally, if two calibration steps are undertaken the first calibration step will be undertaken at a defined time period before the measurement of the test line and the second calibration step will be undertaken at the same defined time period after the measurement of the test line, in which case the average of the two calibration steps can be factored into the measurement of the test line. If the two time periods are not the same, however, the control means can take a weighted average, with the calibration step taken at the time closest to the time of the measurement of the test line having greater effect upon the calibration factor.

It will be understood that there may be some manufacturing tolerance variation in the transmission of light through the lens 28, and some manufacturing tolerance and/or long-term variation in the detection of light intensity by the detector 30. To compensate for such variations the reader device can be calibrated using a test line of known intensity as part of the manufacturing process, and can be subjected to similar re-calibration periodically during its lifetime, if required.

The measurement of the transmissivity of the filter 50 should not be taken at the edge of the filter, so as to avoid any edge variations. Differences in the transmissivity of different calibrating filters can be compensated for by a calibration step as part of the manufacturing process.

## Claims

1. A reader device (10) for a test strip (14), the reader device having:
a channel (12) for receiving the test strip, the channel providing a test location for the test strip whereby the test strip is positioned in the test location during use of the reader device,
a sensor (26, 28, 30) located adjacent to said channel, the sensor comprising a source of radiation (26) for emitting electromagnetic radiation and a detector (28, 30) for detecting the intensity of radiation emitted from the source of radiation after transmission through the test strip, and
a calibrating attenuator (50) through which radiation emitted from the source of radiation can be passed, the calibrating attenuator having a known transmissivity,
**characterised in that** the calibrating attenuator is located adjacent to the channel and away from the test location,
and **in that** the sensor is movable between a test position adjacent to the test location and a separate calibration position adjacent to the calibrating attenuator.

2. A reader device according to Claim 1 in which the source of radiation (26) is electrically-operated, the reader device having control means adapted to alter the electrical supply to the source of radiation so as to alter the intensity of the radiation emitted by the source of radiation.

3. A reader device according to Claim 1 in which the source of radiation (26) and the detector (28, 30) are mounted to opposed sides of the channel (12), and the calibrating attenuator (50) is mounted to lie between the path of movement of the source of radiation (26) and the path of movement of the detector (28, 30).

4. A reader device according to Claim 1 in which the channel is configured to receive an immunoassay test strip of predetermined dimensions.

5. A method of using a reader device comprising the steps of:
{i} providing a reader device (10) according to claim 1,
{ii} moving the sensor adjacent to a test line of a test strip positioned in the test location and detecting the intensity of radiation emitted from the source of radiation (26) and transmitted through the test line,
{iii} moving the sensor adjacent to the calibrating attenuator and directing radiation at the calibrating attenuator, and
{iv} detecting the intensity of radiation emitted from the source of radiation and transmitted through the calibrating attenuator.

6. A method according to Claim 5 in which the source of radiation (26) is electrically-operated, and after step {iv} a further step {v} is performed, in which the electrical voltage and/or current supplied to the source of radiation is altered, steps {iv} and {v} being repeated until the detected intensity matches a predetermined value.

7. A method according to Claim 5 in which the source of radiation (26) is electrically-operated, and step {iv} is continuously performed whilst an additional step {v} is performed, in which the electrical voltage and/or current supplied to the source of radiation is altered, steps {iv} and {v} continuing until the detected intensity matches a predetermined value.

8. A method according to Claim 5 in which, after step {iv}, a correction factor is calculated for use with the detected intensity of radiation transmitted through the test line.

9. A method according to Claim 5 in which steps {iii} and {iv} are undertaken before step {ii}.

10. A method according to Claim 5 in which steps {iii} and {iv} are performed with the test strip (14) located in the test location.

11. A method according to Claim 5 in which the sensor (26, 28, 30) detects the leading edge of a sample as it moves along the test strip.

12. A method according to Claim 5 in which the sensor (26, 28, 30) detects the presence of red blood cells within a sample upon the test strip.

## Patentansprüche

1. Lesevorrichtung (10) für einen Teststreifen (14), die Lesevorrichtung umfassend:
einen Kanal (12) zum Aufnehmen des Teststreifens, wobei der Kanal für den Teststreifen eine Teststelle bereitstellt, wodurch der Teststreifen während der Verwendung der Lesevorrichtung in der Teststelle positioniert wird,
einen Sensor (26, 28, 30), der in unmittelbarer Nähe zu dem Kanal angeordnet ist, der Sensor umfassend eine Strahlungsquelle (26) zum Aussenden elektromagnetischer Strahlung sowie einen Detektor (28, 30) zum Erkennen der Intensität der von der Strahlungsquelle ausgesendeten Strahlung nach der Übertragung durch den Teststreifen hindurch, und
ein Kalibrierungsdämpfungsglied (50), durch welches hindurch die von der Strahlungsquelle ausgesendete Strahlung geleitet werden kann, wobei das Kalibrierungsdämpfungsglied eine bekannte Transmissivität besitzt,
**dadurch gekennzeichnet, dass** das Kalibrierungsdämpfungsglied in unmittelbarer Nähe zu dem Kanal und von der Teststelle entfernt angeordnet ist,
und dass der Sensor beweglich ist zwischen einer Testposition in unmittelbarer Nähe zu der Teststelle und einer getrennten Kalibrierungposition in unmittelbarer Nähe zu dem Kalibrierungsdämpfungsglied.

2. Lesevorrichtung gemäß Anspruch 1, bei der die Strahlungsquelle (26) elektrisch betrieben wird und die Lesevorrichtung über Steuerungseinrichtungen verfügt, die so angepasst ist, dass sie die elektrische Stromversorgung der Strahlungsquelle so verändern kann, dass die Intensität der von der Strahlungsquelle ausgesendeten Strahlung geändert wird.

3. Lesevorrichtung gemäß Anspruch 1, bei der die Strahlungsquelle (26) und der Detektor (28, 30) auf gegenüberliegenden Seiten des Kanals (12) montiert sind und das Kalibrierungsdämpfungsglied (50) so montiert ist, dass es zwischen der Bewegungsstrecke der Strahlungsquelle (26) und der Bewegungsstrecke des Detektors (28, 30) liegt.

4. Lesevorrichtung gemäß Anspruch 1, bei der der Kanal so konfiguriert ist, dass er einen Immunoassay-Teststreifen mit vorgegebenen Abmessungen aufnehmen kann.

5. Verfahren zur Verwendung einer Lesevorrichtung, umfassend die folgenden Schritte:
{i} das Bereitstellen einer Lesevorrichtung (10) gemäß Anspruch 1,
{ii} das Bewegen des Sensors in unmittelbare Nähe einer Testlinie eines Teststreifens, der in der Teststelle positioniert wurde, und das Erkennen der Intensität der von der Strahlungsquelle (26) ausgesendeten Strahlung nach der Übertragung durch die Testlinie hindurch,
{iii} das Bewegen des Sensors in unmittelbare Nähe zum Kalibrierungsdämpfungsglied und das Richten von Strahlung auf das Kalibrierungsdämpfungsglied, und
{iv} das Erkennen der Intensität der von der Strahlungsquelle ausgesendeten und durch das Kalibrierungsdämpfungsglied hindurch übertragenen Strahlung.

6. Verfahren gemäß Anspruch 5, bei dem die Strahlungsquelle (26) elektrisch betrieben wird und nach Schritt {iv} ein weiterer Schritt {v} durchgeführt wird, bei dem die elektrische Spannung und/oder der elektrische Strom zur Versorgung der Strahlungsquelle geändert wird, wobei diese Schritte {iv} und {v} wiederholt werden, bis die erkannte Intensität mit einem vorgegebenen Wert übereinstimmt.

7. Verfahren gemäß Anspruch 5, bei dem die Strahlungsquelle (26) elektrisch betrieben wird und Schritt {iv} kontinuierlich durchgeführt wird, während ein zusätzlicher Schritt {v} durchgeführt wird, bei dem die elektrische Spannung und/oder der elektrische Strom zur Versorgung der Strahlungsquelle geändert wird, wobei die Schritte {iv} und {v} fortgesetzt werden, bis die erkannte Intensität mit einem vorgegebenen Wert übereinstimmt.

8. Verfahren gemäß Anspruch , bei dem nach Schritt {iv} ein Korrekturfaktor berechnet wird, der mit der erkannten Intensität der durch die Testlinie hindurch übertragenen Strahlung verwendet wird.

9. Verfahren gemäß Anspruch 5, bei dem die Schritte {iii} und {iv} vor dem Schritt {ii} durchgeführt werden.

10. Verfahren gemäß Anspruch 5, bei dem die Schritte {iii} und {iv} durchgeführt werden, wenn sich der Teststreifen (14) in der Teststelle befindet.

11. Verfahren gemäß Anspruch 5, bei dem der Sensor (26, 28, 30) die Vorderkante einer Probe erkennt, während er sich entlang dem Teststreifen bewegt.

12. Verfahren gemäß Anspruch 5, bei dem der Sensor (26, 28, 30) das Vorhandensein von roten Blutkörperchen in einer Probe auf dem Teststreifen erkennt.

## Revendications

1. Un dispositif de lecture (10) pour une bandelette de test (14), le dispositif de lecture ayant :
un canal (12) destiné à recevoir la bandelette de test, le canal fournissant un emplacement de test pour la bandelette de test grâce à quoi la bandelette de test est positionnée dans l'emplacement de test durant l'utilisation du dispositif de lecture,
un capteur (26, 28, 30) situé de façon adjacente au dit canal, le capteur comprenant une source de rayonnement (26) pour émettre un rayonnement électromagnétique et un détecteur (28, 30) destiné à détecter l'intensité du rayonnement émis depuis la source de rayonnement après transmission à travers la bandelette de test, et
un atténuateur étalonnant (50) à travers lequel il est possible de faire passer le rayonnement émis depuis la source de rayonnement, l'atténuateur étalonnant ayant une transmissivité connue,
**caractérisé en ce que** l'atténuateur étalonnant est situé de façon adjacente au canal et à distance de l'emplacement de test,
et **en ce que** le capteur peut être déplacé entre une position de test adjacente à l'emplacement de test et un emplacement d'étalonnage distinct adjacent à l'atténuateur étalonnant.

2. Un dispositif de lecture selon la revendication 1 dans lequel la source de rayonnement (26) est à commande électrique, le dispositif de lecture ayant un moyen de commande conçu pour modifier l'alimentation électrique de la source de rayonnement de façon à modifier l'intensité du rayonnement émis par la source de rayonnement.

3. Un dispositif de lecture selon la revendication 1 dans lequel la source de rayonnement (26) et le détecteur (28, 30) sont montés sur des côtés opposés du canal (12), et l'atténuateur étalonnant (50) est monté pour se trouver entre la trajectoire de la source de rayonnement (26) et la trajectoire du détecteur (28, 30).

4. Un dispositif de lecture selon la revendication 1 dans lequel le canal est configuré pour recevoir une bandelette de test immunoessai de dimensions prédéterminées.

5. Un procédé d'utilisation d'un dispositif de lecture comprenant les étapes de :
{i} fournir un dispositif de lecture (10) selon la revendication 1,
{ii} déplacer le capteur de façon adjacente à une ligne de test d'une bandelette de test positionnée dans l'emplacement de test et détecter l'intensité du rayonnement émis depuis la source de rayonnement (26) et transmis à travers la ligne de test,
{iii} déplacer le capteur de façon adjacente à l'atténuateur étalonnant et diriger le rayonnement sur l'atténuateur étalonnant, et
{iv} détecter l'intensité du rayonnement émis depuis la source de rayonnement et transmis à travers l'atténuateur étalonnant.

6. Un procédé selon la revendication 5 dans lequel la source de rayonnement (26) est à commande électrique, et après l'étape {iv} une étape supplémentaire {v} est réalisée, dans laquelle la tension électrique et/ou le courant fourni(e)(s) à la source de rayonnement est/sont modifié(e)(s), les étapes {iv} et {v} étant répétées jusqu'à ce que l'intensité détectée corresponde à une valeur prédéterminée.

7. Un procédé selon la revendication 5 dans lequel la source de rayonnement (26) est à commande électrique, et l'étape {iv} est réalisée de façon continue tandis qu'une étape additionnelle {v} est réalisée, dans laquelle la tension électrique et/ou le courant fourni(e)(s) à la source de rayonnement est/sont modifié(e)(s), les étapes {iv} et {v} continuant jusqu'à ce que l'intensité détectée corresponde à une valeur prédéterminée.

8. Un procédé selon la revendication 5 dans lequel, après l'étape {iv}, un facteur de correction est calculé pour une utilisation avec l'intensité de rayonnement détectée transmise à travers la ligne de test.

9. Un procédé selon la revendication 5 dans lequel les étapes {iii} et {iv} sont entreprises avant l'étape {ii}.

10. Un procédé selon la revendication 5 dans lequel les étapes {iii} et {iv} sont réalisées avec la bandelette de test (14) située dans l'emplacement de test.

11. Un procédé selon la revendication 5 dans lequel le capteur (26, 28, 30) détecte le bord d'attaque d'un échantillon à mesure qu'il se déplace le long de la bandelette de test.

12. Un procédé selon la revendication 5 dans lequel le capteur (26, 28, 30) détecte la présence de globules rouges à l'intérieur d'un échantillon sur la bandelette de test.
